# EUROPEAN PATENT SPECIFICATION

(11) **EP 2 527 401 B1**
(45) Date of publication and mention of the grant of the patent: **05.03.2014**
(21) Application number: 11193796.7
(22) Date of filing: 15.12.2011
(51) Int. Cl.: C08L 69/00, C08K 5/42, C08L 51/04, C08L 67/04, C08L 83/10, C08L 55/02

(54) **Polycarbonate resin composition and molded article including the same**
Polycarbonatharzzusammensetzung und Formartikel daraus
Composition de résine en polycarbonate et article moulé l'incluant

(30) Priority: 26.05.2011 KR 20110050300
(43) Date of publication of application: 28.11.2012
(73) Proprietor: Cheil Industries Inc., Gyeongsangbuk-do 730-710 (KR)
(72) Inventor: Park, Hwan Seok, Uiwang-si, Gyeonggi-do (KR); Shin, Seung Shik, Uiwang-si, Gyeonggi-do (KR); Kang, Min Jung, Uiwang-si, Gyeonggi-do (KR); Yoon, Jong Tae, Uiwang-si, Gyeonggi-do (KR)
(74) Representative: Bublak, Wolfgang

(56) References cited:
- EP-A1- 1 420 047
- EP-A1- 1 541 632
- WO-A1-2007/024456
- US-A1- 2008 051 508

## Description

The present invention relates to a polycarbonate resin composition and a molded article including the same. More particularly, the present invention relates to a polycarbonate resin composition including a polycarbonate resin, a polysiloxane-polycarbonate copolymer, an aromatic vinyl graft copolymer, a sulfonate flame retardant, and a polycaprolactone polymer, and a molded article including the same.

In polycarbonate/acrylonitrile butadiene styrene (PC/ABS) compositions including PC and ABS copolymers, PC generally improves impact strength and heat resistance, and ABS enhances processability and chemical resistance. As such, PC/ABS is used for various purposes due to excellent physical properties thereof as compared with ABS and cost efficiency as compared with PC.

In particular, PC/ABS may be applied to housings for electronic products and requires flame retardancy for such applications. PC/ABS can secure V0-level flame retardancy using 10 % of triphenyl phosphate (TPP). In this case, however, evaporation may occur during a bridging or extrusion process due to low melting point.

Thus, bromide, phosphate ester, and sulfonate flame retardants may be considered. Particularly, phosphate ester flame retardants, which are non-halogen flame retardants, are environmentally friendly as compared with bromides, and is added in an amount of 10 % or more to secure a UL94 flammability rating of V0 or more. Phosphorus flame retardants including resorcinol bis(diphenyl phosphate) (RDP) or bisphenol A bis(diphenyl phosphate) (BDP) may also be used. In this case, injection molding is enabled at 250°C as a flow index increases due to RDP or BDP. However, use of RDP or BDP as flame retardants is regulated due to recent environmental restrictions.

On the contrary, sulfonate flame retardants can secure excellent flame retardancy even in an amount of 1 % or less of polycarbonate along with advantages of non-halogen flame retardants.

However, when sulfonate flame retardants are used for a composition including PC and ABS copolymers, a high injection molding temperature of 280°C or more is generally required. When the injection molding temperature becomes high, impact strength and heat resistance can be deteriorated due to decomposition of resin or the like.

Thus, there is a need for development of a polycarbonate resin that has enhanced fluidity and improved impact strength, and is capable of maintaining gloss and flame retardancy of sulfonate flame retardants.

WO2007/02445 A1 discloses a laminate comprising a first layer comprising a thermoplastic composition containing polycarbonate, polycarbonate-polysiloxane copolymer, impact modifier (acrylonitrile-butadiene-styrene), polyetherimide, and a phosphorus-containing flame retardant (bisphenol A bis(diphenylphosphate). The polyetherimide produces less smoke density.

EP 1541632 A1 discloses a polycarbonate resin composition comprising aromatic polycarbonate resin, acrylonitrile styrene resin, impact resistance enhancer, organic alkaline (earth) metal salt (sodium polystyrene sulfonate), silicone compound, inorganic filler, and polyfluoro olefin resin. The composition does not contain halogen or phosphor in the flame retardant and has good flame retardancy, heat resistance, and impact strength.

It is the object of the present invention to provide a polycarbonate resin composition having enhanced fluidity and improved impact strength, and enabling an injection molding process even at low temperature to maintain excellent flame retardancy and gloss.

The polycarbonate resin composition includes a polycarbonate resin (A), a polysiloxane-polycarbonate copolymer (B), an aromatic vinyl graft copolymer (C), a sulfonate flame retardant (D), and a polycaprolactone polymer (E). In one embodiment, the polycarbonate resin composition includes a base resin including 45 to 86 parts by weight of the polycarbonate resin (A), 10 to 45 parts by weight of the polysiloxane-polycarbonate copolymer (B), and 4 to 10 parts by weight of the aromatic vinyl graft copolymer (C); 0.03 to 5 parts by weight of the sulfonate flame retardant (D); and 1 to 10 parts by weight of the polycaprolactone polymer (E).

The sulfonate flame retardant (D) and the polycaprolactone polymer (E) may be included in a weight ratio of 1:0.3 to 1:250.

The polycarbonate resin may have a flow index of 100 to 130 g/10 min at 300°C and 1.2 kg according to ISO 1133.

The aromatic vinyl graft copolymer (C) may be a graft polymer of a polybutadiene rubber with an aromatic vinyl monomer and a vinyl cyanide monomer, wherein the aromatic vinyl monomer and the vinyl cyanide monomer may be present in a weight ratio of 60:40 to 80:20.

The sulfonate flame retardant (D) may include at least one of alkali metal perfluoroalkane sulfonates, ammonium perfluoroalkane sulfonates, alkali metal salts of aromatic sulfonates, and alkali earth metal salts of aromatic sulfonates.

The polycaprolactone polymer (E) may be selected from a polycaprolactone homopolymer; and copolymers of caprolactone and at least one copolymerizable monomer selected from alkylene oxide, tetrahydrofuran, styrene, methyl methacrylate, and butadiene.

The polycarbonate resin composition may further include additives, such as lubricant additives, antioxidants, chemical resistant additives, surfactants, nucleating agents, coupling agents, fillers, plasticizers, impact modifiers, antimicrobial agents, releasing agents, heat stabilizers, photostablizers, compatibilizers, inorganic additives, coloring agents, stabilizers, antifriction agents, anti-static agents, pigments, dyes, fireproofing agents, or the like.

The resin composition may have a UL94 flammability rating of V0 or more, measured on a 2 mm-thick specimen, have a flow index of 30 g/10 min or more, evaluated at 220°C and a load of 10 kg according to ISO 1113, have an Izod impact strength of 23 kg·cm/cm or more, evaluated according to ASTM D-256 (1/8", notched), and have a 60° gloss of 97 or more, evaluated according to ASTM D528.

Another aspect of the present invention provides a molded article using the polycarbonate resin composition.

Exemplary embodiments will now be described in detail hereinafter with reference to the accompanying drawing.

One aspect of the present invention provides a polycarbonate resin composition including a polycarbonate resin (A), a polysiloxane-polycarbonate copolymer (Si-PC copolymer) (B), an aromatic vinyl graft copolymer (C), a sulfonate flame retardant (D), and a polycaprolactone polymer (E). Hereinafter, each component will be described in detail.

### (A) Polycarbonate resin

The polycarbonate resin (A) may be prepared by reaction of diphenols represented by Formula 1 with phosgene, halogen formate or carbonic acid diester: 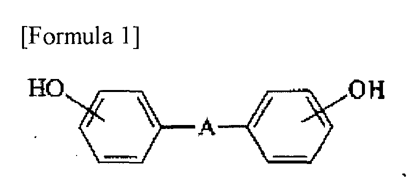 where A represents a single bond, C1 to C5 alkylene, C1 to C5 alkylidene, C5 to C6 cycloalkylidene, -S-, or -SO₂-.

Examples of the diphenols represented by Formula 1 may include 4,4'-dihydroxydiphenyl, 2,2-bis(4-hydroxyphenyl)propane, 2,4-bis(4-hydroxyphenyl)-2-methylbutane, 1,1-bis(4-hydroxyphenyl)cyclohexane, 2,2-bis(3-chloro-4-hydroxyphenyl)propane, and 2,2-bis(3,5-dichloro-4-hydroxyphenyl)propane, without being limited thereto. Here, 2,2-bis(4-hydroxyphenyl)propane, 2,2-bis(3,5-dichloro-4-hydroxyphenyl)propane, and 1,1-bis(4-hydroxyphenyl)cyclohexane is preferably used; and 2,2-bis(4-hydroxyphenyl)propane, also referred to as bisphenol A, is more preferably used.

Further, the diphenols may also include resorcinol and hydroquinone.

The polycarbonate resin (A) may be a homopolymer using one kind of dihydric phenol, or copolymers or mixtures using at least two kinds of dihydric phenols.

The polycarbonate resin (A) may have a weight average molecular weight of 5,000 to 200,000 g/mol, preferably 13,000 to 80,000 g/mol. In one embodiment, the polycarbonate resin (A) may have a weight average molecular weight of 15,000 to 50,000 g/mol.

The polycarbonate resin (A) may be a linear polycarbonate resin, a branched polycarbonate resin, a copolymer or mixture thereof, or a polyester carbonate copolymer resin.

Specifically, the polycarbonate resin (A) may be a high-fluidity polycarbonate resin having a high flow index. In one embodiment, the polycarbonate resin may have a flow index of 90 to 130 g/10 min, preferably 100 to 130 g/10 min at 300°C and 1.2 kg according to ISO 1133. Within this range, both mechanical properties and fluidity in injection molding can be satisfied.

The polycarbonate resin (A) may be present in an amount of 45 to 86 parts by weight of a base resin composed of (A), (B), and (C). Within this range, stable mechanical strength and flame retardancy can be exhibited. In one embodiment, the polycarbonate resin (A) may be present in an amount of 47 to 80 parts by weight, preferably 50 to 70 parts by weight of the base resin composed of (A), (B), and (C).

### (B) Polysiloxane-polycarbonate copolymer (Si-PC copolymer)

The polysiloxane-polycarbonate copolymer (B) includes a polycarbonate block and a polysiloxane block.

The polycarbonate block may include a structural unit derived from the polycarbonate resin.

The polysiloxane block may include a structural unit represented by Formula 2: 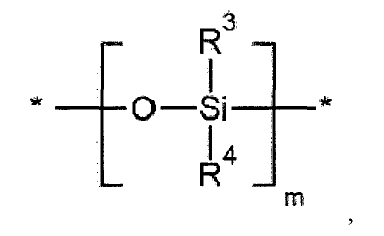 where R³ and R⁴ may be the same or different and represent a hydrogen atom, a substituted or unsubstituted C1 to C20 alkyl group, a substituted or unsubstituted C2 to C20 alkenyl group, a substituted or unsubstituted C2 to C20 alkynyl group, a substituted or unsubstituted C1 to C20 alkoxy group, a substituted or unsubstituted C3 to C30 cycloalkyl group, a substituted or unsubstituted C3 to C30 cycloalkenyl group, a substituted or unsubstituted C3 to C30 cycloalkynyl group, a substituted or unsubstituted C6 to C30 aryl group, a substituted or unsubstituted C6 to C30 aryloxy group, or NRR' (R and R' being the same or different and each representing a hydrogen atom or a substituted or unsubstituted C1 to C20 alkyl group, and 2 ≤ m<10,000.

In Formula 2, m may be in the range from 2 to 10,000. In one embodiment, m may be in the range from 2 to 1,000. Within this range, excellent impact resistance can be obtained and proper viscosity can be maintained, thereby providing favorable conditions for extrusion. Specifically, m may be 10 to 100, preferably 25 to 80.

The polysiloxane-polycarbonate copolymer (B) may include 1 to 99 wt% of the polycarbonate block and 1 to 99 wt% of the polysiloxane block. In one embodiment, the polysiloxane-polycarbonate copolymer may include 40 to 80 wt% of the polycarbonate block and 20 to 60 wt% of the polysiloxane block. Within this range, excellent impact resistance can be obtained. In another embodiment, the polysiloxane-polycarbonate copolymer may include 80 to 95 wt% of the polycarbonate block and 5 to 20 wt% of the polysiloxane block.

The polysiloxane-polycarbonate copolymer (B) may have a weight average molecular weight of 10,000 to 80,000 g/mol, specifically 15,000 to 30,000 g/mol. Within this range, excellent impact resistance can be obtained.

The polysiloxane-polycarbonate copolymer (B) may have a melt index (MI) of 3 to 100 g/10 min, preferably 10 to 70 g/10 min at 300°C and 1.2 kgf. In one embodiment, the polysiloxane-polycarbonate copolymer (B) may have an MI of 20 to 50 g/10 min. Within this range, both excellent mechanical properties and excellent fluidity in injection molding can be obtained.

The polysiloxane-polycarbonate copolymer (B) may be prepared by any method known in the art. In one embodiment, the polysiloxane-polycarbonate copolymer may be prepared by copolymerization of a bivalent phenolic compound with a bivalent phenolic compound having a siloxane group. Copolymerization may be conducted by any known method, e.g., interfacial polycondensation, emulsion polymerization, and the like. The polysiloxane-polycarbonate copolymer may include commercially available products, e.g., Taflon produced by Idemitsu Chemicals.

The polysiloxane-polycarbonate copolymer (B) may be present in an amount of 10 to 45 parts by weight of the base resin composed of (A), (B), and (C). Within this range, excellent property balance between flame retardancy and fluidity can be obtained. Specifically, the amount may be 24 to 44 parts by weight.

### (C) Aromatic vinyl graft copolymer

The aromatic vinyl graft copolymer (C) may be prepared by polymerization of a rubber polymer, an aromatic vinyl monomer graft-polymerizable_with the rubber polymer and a monomer copolymerizable with the aromatic vinyl monomer.

Examples of the rubber polymer may include diene rubbers, such as polybutadiene, poly(styrene-butadiene), poly(acrylonitrile-butadiene), and the like, saturated rubbers obtained by addition of hydrogen to the diene rubbers, isoprene rubber, chloroprene rubber, acrylic rubbers, such as poly(butyl acrylic acid), tripolymers of ethylene/propylene/diene monomers (EPDM), and the like. Here, diene rubbers are preferable; and poly butadiene is more preferable.

The rubber polymer may be present in an amount of 5 to 65 % by weight (wt%), preferably 20 to 60 wt% in the aromatic vinyl graft copolymer (C). The rubber polymer may have an average size of 0.1 to 4 µm, preferably 0.2 to 2 µm. Within this range, excellent impact strength and appearance can be obtained.

Examples of the aromatic vinyl monomer graft-polymerizable with the rubber polymer may include, without being limited to, styrene, α-methylstyrene, β-methylstyrene, p-methylstyrene, para-t-butylstyrene, ethylstyrene, vinylxylene, monochlorostyrene, dichlorostyrene, dibromostyrene, and vinylnaphthalene, which may be used alone or as mixtures. Here, styrene is preferable. The aromatic vinyl monomer may be present in an amount of 30 to 90 wt% in the aromatic vinyl graft copolymer (C).

Examples of the monomer copolymerizable with the aromatic vinyl monomer may include acrylonitrile, methacrylonitrile, or mixtures thereof. Here, acrylonitrile is preferable. The copolymerizable monomer may be present in an amount of 1 to 10 wt% in the graft copolymer.

The aromatic vinyl graft copolymer (C) may be an acrylonitrile butadiene styrene copolymer (ABS) prepared by emulsion grafting of polybutadiene latex (PBL) with a styrene monomer and acrylonitrile in a weight ratio of 60:40 to 80:20.

The aromatic vinyl graft copolymer (C) may be present in an amount of 4 to 10 parts by weight based on 100 parts by weight of the base resin composed of (A), (B), and (C). Within this range, proper impact strength can be maintained.

### (D) Sulfonate flame retardant

The sulfonate flame retardant may include alkali metal perfluoroalkane sulfonates, ammonium perfluoroalkane sulfonates, or alkali metal salts or alkaline earth metal salts of aromatic sulfonates. Specifically, alkali metal perfluoroalkane sulfonates or ammonium perfluoroalkane sulfonates may be used. Perfluoroalkanes may include C1 to C8 alkyl groups.

Examples of the alkali metal perfluoroalkane sulfonates and ammonium perfluoroalkane sulfonates may include, without being limited to, sodium perfluorobutane sulfonate, potassium perfluorobutane sulfonate, sodium perfluoromethylbutane sulfonate, potassium perfluoromethylbutane sulfonate, sodium perfluoroethane sulfonate, potassium perfluoroethane sulfonate, sodium perfluoropropane sulfonate, potassium perfluoropropane sulfonate, sodium perfluorohexane sulfonate, potassium perfluorohexane sulfonate, sodium perfluoroheptane sulfonate, potassium perfluoroheptane sulfonate, sodium perfluorooctane sulfonate, potassium perfluorooctane sulfonate, tetraethylammonium perfluorobutane sulfonate, tetraethylammonium perfluoromethylbutane sulfonate, and the like, which may be used alone or as mixtures. Specifically, potassium perfluorobutane sulfonate (KPFBS) may be used.

Examples of the alkali metal salts or alkaline earth metal salts of the aromatic sulfonates may include, without being limited to, potassium diphenylsulfone-3-sulfonate, dipotassium diphenylsulfone-3,3'-disulfonate, dipotassium 4,2',4',5'-tetrachlorodiphenylsulfone-3,5-disulfonate, dipotassium diphenylsulfone-3,3'-disulfonate, and the like, which may be used alone or as mixtures.

The sulfonate flame retardant (D) may be present in an amount of 0.03 to 5 parts by weight of the base resin composed of (A), (B), and (C). Within this range, appropriate flame retardancy and gloss can be maintained in the mixture. Specifically, the amount may be 0.1 to 3 parts by weight.

In one embodiment, the sulfonate flame retardant (D) and the polycaprolactone polymer (E) may be added in a weight ratio of 1:0.3 to 1:250 in the composition. Within this range, improved flame retardancy, fluidity, and gloss can be exhibited in the mixture. Specifically, the sulfonate flame retardant (D) and the polycaprolactone polymer (E) may be added in a weight ratio of 1:0.3 to 1:80. In one embodiment, the sulfonate flame retardant (D) and the polycaprolactone polymer (E) may be present in a weight ratio of 1:10 to 1:80.

### (E) Polycaprolactone polymer

The polycaprolactone polymer (E) may be selected from a caprolactone homopolymer and copolymers obtained by polymerization of caprolactone with monomers copolymerizable with caprolactone.

Examples of the monomers copolymerizable with the caprolactone may include, without being limited to, alkylene oxides, such as β-propiolactone, pivalolactone, butyrolactone, ethylene oxide, 1,2-propylene oxide, and 1,3-propylene oxide; tetrahydrofuran; and unsaturated group containing monomers, such as styrene, methyl methacrylate, and butadiene. Here, caprolactone may be present in an amount of 40 to 98 wt%, e.g., 45 to 90 wt%, in the copolymer.

The polycaprolactone polymer (E) may have a number average molecular weight of 1,000 to 100,000 g/mol. Within this range, good heat stability, transparency, and processability can be obtained.

The polycaprolactone polymer (E) may be present in an amount of 1 to 10 parts by weight based on 100 parts by weight of the base resin composed of (A), (B), and (C). Within this range, high fluidity and impact strength can be obtained. Specifically, the amount may be 1 to 8 parts by weight of the composition.

In addition to these components, the polycarbonate resin composition may further include other additives. The other additives may include, without being limited to, lubricant additives, antioxidants, chemical resistant additives, surfactants, nucleating agents, coupling agents, fillers, plasticizers, impact modifiers, antimicrobial agents, releasing agents, heat stabilizers, photostablizers, compatibilizers, inorganic additives, coloring agents, stabilizers, antifriction agents, anti-static agents, pigments, dyes, fireproofing agents, and the like, which may be used alone or as mixtures. The additives may be present, without being limited to, in an amount of 0.1 to 3 parts by weight based on 100 parts by weight of the base resin composed of (A), (B), and (C).

The resin composition may have a UL94 flammability rating of V0 or more, measured on a 2 mm-thick specimen.

The resin composition may have a flow index of 30 g/10 min or more, e.g., 32 to 100 g/10 min, evaluated at 220°C and a load of 10 kg according to ISO 1113. In one embodiment, the resin composition may have a flow index of 34 to 86 g/10 min.

The resin composition may have an Izod impact strength of 23 kg·cm/cm or more, e.g., 23 to 90 kg·cm/cm, evaluated according to ASTM D-256 (1/8", notched). In one embodiment, the resin composition may have an Izod impact strength of 25 to 55 kg·cm/cm.

The resin composition may have a 60° gloss of 97 or more, e.g., 97 to 120, evaluated according to ASTM D528. In one embodiment, the resin composition may have a 60° gloss of 97 to 102.

Another aspect of the present invention provides a molded article using the polycarbonate resin composition. Any molding method known to those skilled in the art may be used.

Hereinafter, the constitution and functions of the present invention will be explained in more detail with reference to the following examples. These examples are provided for illustrative purposes only and are not to be in any way construed as limiting the present invention.

A description of details apparent to those skilled in the art will be omitted.

Details of components used in Examples and Comparative Examples are described as follows.
(A) Polycarbonate resin: FX-8800 having a flow index of 120 g/10 min at 300°C and 1.2 kgf according to ISO 1133, produced by Cheil Industries Inc.
(B) Polysiloxane-polycarbonate (Si-PC) copolymer: Tarflon having a flow index of 27 g/10 min at 300°C and 1.2 kgf according to ISO 1133, produced by Idemitsu Chemicals.
(C) Aromatic vinyl graft copolymer: g-ABS, prepared through emulsion graft of 60 parts by weight of a butadiene rubber having an average diameter of 310 nm and 40 parts by weight of a vinyl polymer including 75 wt% of styrene and 25 wt% of acrylonitrile by a method known in the art.
(D) Sulfonate flame retardant: Potassium perfluorobutane sulfonate, FR-205 produced by 3M.
(D') Other flame retardants than sulfonate flame retardant, for example: Bisphenol-A bis(diphenyl phosphate) (BDP).
(E) Polycaprolactone (PCL) polymer: Placcel HIP having a number average molecular weight of 10,000 g/mol and a glass transition temperature of -60°C, produced by Daicel Chemical.
(E') Other fluidizing agents than polycaprolactone polymer, for example: S101N, produced by UMG

### Examples 1 to 7

The above components were mixed according to compositions listed in Table 1. Then, 0.5 parts by weight of polytetrafluoroethylene powder as an additive, 0.5 parts by weight of Irganox 1076 (Ciba) as an antioxidant, and 0.5 parts by weight of Luwax (BASF) as a lubricant were added to the mixture, followed by mixing in a mixer and extrusion using a biaxial extruder (L/D=35 and φ=45 mm). The extruded product was formed into pellets, and then injection-molded into a specimen at 250°C using a 10 oz injection molding machine. The specimen was left at 23°C and 50 %RH for 48 hours.

### Comparative Examples 1 to 6

Specimens were prepared in the same manner as in Examples 1 to 7 except that the components were changed according to Table 2.

**TABLE 1**

| | Example 1 | Example 2 | Example 3 | Example 4 | Example 5 | Example 6 | Example 7 |
|---|---|---|---|---|---|---|---|
| (A) | 70 | 70 | 70 | 50 | 70 | 70 | 70 |
| (B) | 24 | 24 | 24 | 44 | 24 | 24 | 24 |
| (C) | 6 | 6 | 6 | 6 | 6 | 6 | 6 |
| (D) | 0.1 | 0.1 | 0.1 | 0.1 | 1 | 3 | 0.1 |
| (D') | - | - | - | - | - | - | - |
| (E) | 1 | 3 | 5 | 5 | 5 | 1 | 8 |
| (E') S101N | - | - | - | - | - | - | - |

**TABLE 2**

| | Comparative Example 1 | Comparative Example 2 | Comparative Example 3 | Comparative Example 4 | Comparative Example 5 | Comparative Example 6 |
|---|---|---|---|---|---|---|
| (A) | 70 | 70 | 70 | 70 | 70 | 70 |
| (B) | 24 | 24 | 24 | 24 | 24 | 24 |
| (C) | 6 | 6 | 6 | 6 | 6 | 6 |
| (D) | 0.1 | 0.1 | - | 0.02 | 6 | 0.1 |
| (D') | - | - | 0.1 | - | - | - |
| (E) | 0.5 | 11 | 1 | 1 | 1 | - |
| (E') S101N | - | - | - | - | - | 1 |

### Experimental Example: Evaluation of physical properties of polycarbonate resin compositions

Physical properties of the specimens prepared in Examples and Comparative Examples were measured as follows, and results are shown in Tables 3 and 4.

### <Methods of evaluation of physical properties>

### 1. Flame retardancy

According to the UL94 flammability rating, the flame retardancy of a 2 mm-thick specimen was measured.

### 2. Flow index (g/10 min)

According to ISO 1113, flow index was evaluated at 220°C and a load of 10 kg.

### 3. Izod impact strength (kg·cm/cm)

According to ASTM D-256 (1/8", notched), Izod impact strength was evaluated.

### 4. 60° gloss

According to ASTM D528, 60° gloss was evaluated using a BYK-Gardner gloss meter.

**TABLE 3**

| | Example 1 | Example 2 | Example 3 | Example 4 | Example 5 | Example 6 | Example 7 |
|---|---|---|---|---|---|---|---|
| Flame retardancy | V0 | V0 | V0 | V0 | V0 | V0 | V0 |
| Flow index (g/10min) | 34 | 51 | 67 | 38 | 72 | 37 | 86 |
| Impact strength (kg. cm/cm) | 41 | 34 | 30 | 38 | 26 | 28 | 23 |
| Gloss | 97.3 | 97.0 | 99.3 | 98.5 | 101.3 | 97.8 | 98.7 |

**TABLE 4**

| | Comparative Example 1 | Comparative Example 2 | Comparative Example 3 | Comparative Example 4 | Comparative Example 5 | Comparative Example 6 |
|---|---|---|---|---|---|---|
| Flame retardancy | V0 | V0 | Fail | V2 | V0 | V1 |
| Flow index (g/10min) | 27 | 92 | 35 | 32 | 34 | 27 |
| Impact strength (kg. cm/cm) | 42 | 11 | 33 | 40 | 15 | 31 |
| Gloss | 92.4 | 97.2 | 97.0 | 97.5 | 91.4 | 97.4 |

As shown in Tables 3 and 4, the polycarbonate resin compositions including the PCL as a fluidizing agent and the sulfonate flame retardant as a flame retardant in a predetermined content exhibited good fluidity and impact strength while maintaining proper flame retardancy and gloss. However, when the PCL and the sulfonate flame retardant were used as a fluidizing agent and as a flame retardant, respectively, but were added in an inappropriate amount, there were limitations in improving fluidity, impact strength, flame retardancy, and gloss at the same time. Further, when the BDP replaced the sulfonate flame retardant in the same amount as a flame retardant, the composition did not secure sufficient flame retardancy. In addition, when a different fluidizing agent from the PCL was used, the composition did not have improved fluidity.

Although some embodiments have been disclosed herein, it should be understood by those skilled in the art that these embodiments are provided by way of illustration only, and that various modifications, changes, and alterations can be made without departing from scope of the invention. Therefore, the scope of the invention should be limited only by the accompanying claims and equivalents thereof.

## Claims

1. A polycarbonate resin composition comprising:
a base resin composed of 45 to 86 parts by weight of a polycarbonate resin (A), 10 to 45 parts by weight of a polysiloxane-polycarbonate copolymer (B), and 4 to 10 parts by weight of an aromatic vinyl graft copolymer (C);
0.03 to 5 parts by weight of a sulfonate flame retardant (D) based on 100 parts by weight of a base resin; and
1 to 10 parts by weight of a polycaprolactone polymer (E) based on 100 parts by weight of a base resin.

2. The polycarbonate resin composition of claim 1, wherein the sulfonate flame retardant (D) and the polycaprolactone polymer (E) are present in a weight ratio of 1:0.3 to 1:250.

3. The polycarbonate resin composition of claim 1 or 2, wherein the polycarbonate resin has a flow index of 100 to 130 g/10 min at 300°C and 1.2 kg according to ISO 1133.

4. The polycarbonate resin composition of any of claims 1 to 3, wherein the aromatic vinyl graft copolymer is a graft polymer of a polybutadiene rubber with an aromatic vinyl monomer and a vinyl cyanide monomer, and the aromatic vinyl monomer and the vinyl cyanide monomer are present in a weight ratio of 60:40 to 80:20.

5. The polycarbonate resin composition of any of claims 1 to 4, wherein the sulfonate flame retardant (D) comprises at least one of alkali metal perfluoroalkane sulfonates, ammonium perfluoroalkane sulfonates, alkali metal salts of aromatic sulfonates, and alkali earth metal salts of aromatic sulfonates.

6. The polycarbonate resin composition of any of claims 1 to 5, wherein the polycaprolactone polymer (E) is selected from a caprolactone homopolymer, and copolymers of caprolactone and at least one copolymerizable monomer selected from alkylene oxide, tetrahydrofuran, styrene, methyl methacrylate, and butadiene.

7. The polycarbonate resin composition of any of claims 1 to 6, wherein the polycarbonate resin composition further comprises at least one additive selected from lubricant additives, antioxidants, chemical resistant additives, surfactants, nucleating agents, coupling agents, fillers, plasticizers, impact modifiers, antimicrobial agents, releasing agents, heat stabilizers, photostablizers, compatibilizers, inorganic additives, coloring agents, stabilizers, antifriction agents, anti-static agents, pigments, dyes, and fireproofing agents.

8. The polycarbonate resin composition of any of claims 1 to 7, wherein the resin composition has a UL94 flammability rating of V0 or more, measured on a 2 mm-thick specimen, has a flow index of 30 g/10 min or more, evaluated at 220°C and a load of 10 kg according to ISO 1113, has an Izod impact strength of 23 kg·cm/cm or more, evaluated according to ASTM D-256 (1/8", notched), and has a 60° gloss of 97 or more, evaluated according to ASTM D528.

9. A molded article obtainable the polycarbonate resin composition of any one of claims 1 to 8.

## Patentansprüche

1. Polycarbonatharzzusammensetzung, umfassend:
ein Basisharz, zusammengesetzt aus 45 bis 86 Gewichtsteilen eines Polycarbonatharzes (A), 10 bis 45 Gewichtsteilen eines Polysiloxan-Polycarbonat-Copolymers (B), und 4 bis 10 Gewichtsteilen eines aromatischen Vinylpfropf copolymers (C);
etwa 0,03 bis 5 Gewichtsteile eines Sulfonflammhemmers (D) auf der Basis von 100 Gewichtsteilen eines Basisharzes; und
etwa 1 bis 10 Gewichtsteile eines Polycaprolactonpolymers (E) auf der Basis von 100 Gewichtsteilen eines Basisharzes.

2. Polycarbonatharzzusammensetzung nach Anspruch 1, wobei der Sulfonflammhemmer (D) und das Polycaprolactonpolymer (E) in einem Gewichtsverhältnis von 1:0,3 bis 1:250 vorliegen.

3. Polycarbonatharzzusammensetzung nach Anspruch 1 oder 2, wobei das Polycarbonatharz einen Schmelzflussindex von 100 bis 130 g/10 Min. bei 300°C und 1,2 kg gemäß ISO 1133 aufweist.

4. Polycarbonatharzzusammensetzung nach einem der Ansprüche 1 bis 3, wobei das aromatische Vinylpfropfcopolymer ein Pfropfpolymer von einem Polybutadienkautschuks mit einem aromatischen Vinylmonomer und einem Vinylcyanidmonomer ist und das aromatische Vinylmonomer und das Vinylcyanidmonomer in einem Gewichtsverjältnis von 60:40 bis 80:20 vorliegen.

5. Polycarbonatharzzusammensetzung nach einem der Ansprüche 1 bis 4, wobei der Sulfonflammhemmer (D) mindestens eines von Alkalimetallperfluoralkansulfonaten, Ammoniumperfluoralkansulfonatem, Alkalimetallsalzen von aromatischen Sulfonaten und Erdalkalimetallsalzen von aromatischen Sulfonaten umfasst..

6. Polycarbonatharzzusammensetzung nach einem der Ansprüche 1 bis 5, wobei das Polycaprolactonpolymer (E) ausgewählt ist aus einem Caprolactonhomopolymer und Copolymeren von Caprolacton und mindestens einem cpolymerisierbaren Monomer, ausgewählt aus Alkylenoxid, Tetrahydrofuran, Styrol, Methylmethacrylat und Butadien.

7. Polycarbonatharzzusammensetzung nach einem der Ansprüche 1 bis 6, wobei die Polycarbonatharzzusammensetzung des Weiteren mindestens einen Zusatzstoff umfasst, der ausgewählt ist aus Schmiermittelzusatzstoffen, Antioxidationsmitteln, chemikalienbeständigen Zusatzstoffen, oberflächenaktiven Mitteln, Keimbildnern, Kupplungsmitteln, Füllstoffen, Weichmachern, Schlagmodifikatoren, antimikrobiellen Mitteln, Trennmitteln, Wärmestabilisatoren, Lichtstabilisatoren, Verträglichmachern,
anorganischen Zusatzstoffen, Farbmitteln, Stabilisatoren, Antireibungsmitteln, Antistatikmitteln, Pigmenten, Farbstoffen und Flammschutzmitteln.

8. Polycarbonatharzzusammensetzung nach einem der Ansprüche 1 bis 7, wobei die Harzzusammensetzung eine an einem 2 mm dicken Probenstück gemessene UL94-Flammbarkeitsklasse von V0 oder mehr, einen bei 220°C und einer Last von 10 kg nach ISO 1113 beurteilten Fließindex von 30 g/10 Min. oder mehr, eine gemäß ASTM D-256 (1/8", gekerbt) beurteilte Izod-Schlagzähigkeit von 23 kg·cm/cm oder mehr und einen gemäß ASTM D528 beurteilten 60°-Glanz von 97 oder mehr aufweist.

9. Formgegenstand, der aus der Polycarbonatharzzusammensetzung nach einem der Ansprüche 1 bis 8 erhältlich ist.

## Revendications

1. Composition de résine de polycarbonate, comprenant :
une résine de base composée de 45 à 86 parties en poids d'une résine de polycarbonate (A), de 10 à 45 parties en poids d'un copolymère polysiloxane-polycarbonate (B), et de 4 à 10 parties en poids d'un copolymère greffé vinylaromatique (C) ;
0,03 à 5 parties en poids d'un retardateur de flamme de type sulfonate (D), pour 100 parties en poids d'une résine de base ; et
1 à 10 parties en poids d'un polymère polycaprolactone (E), pour 100 parties en poids d'une résine de base.

2. Composition de résine de polycarbonate selon la revendication 1, dans laquelle le retardateur de flamme de type sulfonate (D) et le polymère polycaprolactone (E) sont présents selon un rapport en poids de 1:0,3 à 1:250.

3. Composition de résine de polycarbonate selon la revendication 1 ou 2, dans laquelle la résine de polycarbonate a un indice de fluidité de 100 à 130 g/10 min à 300°C sous 1,2 kg selon ISO 1133.

4. Composition de résine de polycarbonate selon l'une quelconque des revendications 1 à 3, dans laquelle le copolymère greffé vinylaromatique est un polymère greffé d'un caoutchouc polybutadiène et d'un monomère vinylaromatique et d'un cyanure de vinyle monomère, et le monomère vinylaromatique et le cyanure de vinyle monomère sont présents selon un rapport en poids de 60:40 à 80:20.

5. Composition de résine de polycarbonate selon l'une quelconque des revendications 1 à 4, dans laquelle le retardateur de flamme de type sulfonate (D) comprend au moins l'un de perfluoroalcanesulfonates d'un métal alcalin, de perfluoroalcanesulfonates d'ammonium, de sels de métaux alcalins de sulfonates aromatiques et de sels de métaux alcalino-terreux de sulfonates aromatiques.

6. Composition de résine de polycarbonate selon l'une quelconque des revendications 1 à 5, dans laquelle le polymère polycaprolactone (E) est choisi parmi un homopolymère du caprolactone et les copolymères du caprolactone et d'au moins un monomère copolymérisable choisi parmi les oxydes d'alkylène, le tétrahydrofuranne, le styrène, le méthacrylate de méthyle et le butadiène.

7. Composition de résine de polycarbonate selon l'une quelconque des revendications 1 à 6, la composition de résine de polycarbonate comprenant en outre un additif choisi parmi les additifs lubrifiants, les antioxydants, les additifs de résistance aux agents chimiques, les tensioactifs, les agents de nucléation, les agents de couplage, les charges, les plastifiants, les modifiants chocs, les agents antimicrobiens, les agents de démoulage, les stabilisants thermiques, les photostabilisants, les agents de compatibilisation, les additifs inorganiques, les agents colorants, les stabilisants, les agents antifriction, les agents antistatiques, les pigments, les colorants et les agents d'ignifugation.

8. Composition de résine de polycarbonate selon l'une quelconque des revendications 1 à 7, la composition de résine ayant une tenue au feu UL94 de V0 ou plus, mesurée sur une éprouvette de 2 mm d'épaisseur, a un indice de fluidité de 30 g/10 min ou plus, évalué à 220°C sous une charge de 10 kg selon ISO 1113, a une résistance au choc Izod de 23 kg.cm/cm ou plus, évaluée selon ASTM D-256 (1/8", barreau entaillé), et a un brillant à 60° de 97 ou plus, évalué selon ASTM D528.

9. Objet moulé pouvant être obtenu avec la composition de résine de polycarbonate selon l'une quelconque des revendications 1 à 8.
